# EUROPÄISCHE PATENTSCHRIFT

(11) **EP 0 609 659 B1**
(45) Veröffentlichungstag und Bekanntmachung des Hinweises auf die Patenterteilung: **02.05.1997**
(21) Anmeldenummer: 94100213.1
(22) Anmeldetag: 08.01.1994
(51) Int. Cl.: F16H 57/04, F16H 57/08

(54) **Planetenträger-Anordnung mit einer ringförmigen Ölstauscheibe**
Satellite carrier with lubricant collecting oil ring
Porte-satellites avec anneau collecteur de lubrifiant

(30) Priorität: 02.02.1993 DE 4302844
(43) Veröffentlichungstag der Anmeldung: 10.08.1994
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Premiski, Vladimir, D-53902 Bad Münstereifel (DE); Silk, Mark, D-50767 Köln (DE); Wehren, Wilhelm, D-50171 Kerpen (DE)
(74) Vertreter: Messulam, Alec Moses

(56) Entgegenhaltungen:
- EP-A- 0 025 300
- EP-A- 0 274 874
- DE-A- 1 650 681
- FR-A- 2 371 616
- GB-A- 2 058 240

## Beschreibung

Die Erfindung bezieht sich auf eine Planetenradträger-Anordnung mit einer ringförmigen Ölstauscheibe, der im Oberbegriff des Patentanspruches 1 erläuterten Art.

Aus der EP-A 0 274 874 ist eine Planetenradträger-Anordnung mit einer ringförmigen Ölstauscheibe, der im Oberbegriff des Patentanspruches 1 erläuterten Art bekannt.

Bei der bekannten Planetenradträger-Anordnung ist die an einem Bereich radial außerhalb der Planetenradbolzen an einem Seitenwandbauteil des Planetenradträgers festgelegte Ölstauscheibe aus einem einfachen Blechpreßteil gebildet, welches einen radialen Flanschteil und einen kegelförmigen Fangteil aufweist, wobei die Ölstauscheibe an ihrem Flanschteil mittels eines Seeger- oder Sicherungsringes festgelegt wird, der gleichzeitig zur Festlegung der Planetenradbolzen herangezogen wird.

Bei der bekannten Anordnung und Ausbildung einer Ölstauscheibe kann über ihren Flanschteil und die Festlegung über den Sicherungsring eine beträchtliche Menge des aufgefangenen Schmiermittels radial verlorengehen, weil die radiale Abdichtung durch den eine radiale Öffnung aufweisenden Sicherungsring nicht vollständig ist.

Bei durch Schmiermittelmangel verursachten Schmierproblemen kommt es jedoch darauf an, die gesamte Menge des von der Ölstauscheibe erfaßten Schmiermittels den Lagerstellen der Planetenräder zuzuleiten.

Für einen derart kritischen Anwendungsfall wurde von der Anmelderin bereits eine Ölstauscheibe angewendet, die aus einem radialen Flanschteil und einem konischen Fangteil bestand und durch einen Seegerring festgelegt war, wobei der Außenumfang des Flanschteiles mit einer axial anvulkanisierten Dichtung aus elastischem Material versehen war, die gegenüber dem inneren Endbereich eines als Trommelbauteil ausgebildeten Seitenwandbauteils eines Planetenradträgers abdichtete.

Der Fertigungsvorgang zum Anvulkanisieren der Dichtung an die Ölstauscheibe aus Blech ist verhältnismäßig aufwendig und teuer und auch die für das Festlegen der Ölstauscheibe mittels eines Seegerringes erforderliche Nut erfordert einen zusätzlichen Bearbeitungsgang an dem trommelförmigen Seitenwandbauteil des Planetenradträgers.

Die Aufgabe der Erfindung ist es, eine Planetenradträger-Anordnung mit einer ringförmigen Ölstauscheibe der im Oberbegriff des Patentanspruches 1 erläuterten Art derart zu verbessern, daß die Ölstauscheibe einfach und kostengünstig herstellbar ist und auch einfacher und billiger am Seitenwandbauteil festgelegt werden kann.

Die Erfindung bedient sich hierzu einer Anregung, die aus der DE-PS 33 05 419 abgeleitet wird, wo ein selbstsichernder Zackenring zum Festlegen von Maschinenbauteilen an einem Innenumfang eines anderen Bauteiles aufgezeigt und erläutert wird.

Gemäß der Erfindung wird die Aufgabe gelöst, indem eine Planetenradträger-Anordnung mit einer ringförmigen Ölstauscheibe der im Oberbegriff des Patentanspruches 1 erläuterten Art die im Kennzeichenteil des Patentanspruches aufgezeigten Merkmale aufweist.

Dadurch, daß die Ölstauscheibe aus einem sich am Innenumfang des Trommelbauteiles verspreizenden selbstsichernden Konusring und einem auf dessen glatten Innenumfang aufgeklipsten oder aufgeschweißten Kunststoff-Formteil besteht, der in einer Haltenut einen O-Ring aufnimmt, wird eine Planetenradträger-Anordnung mit einer ringförmigen Ölstauscheibe geschaffen, die aus auf einfache Weise hergestellten Bauteilen zusammengesetzt ist und eine einfachere und sichere Montage ermöglicht und eine vollständige Abdichtung am Außenumfang gewährleistet.

Im Anspruch 2 wird auf eine zweckmäßige Ausbildung der Haltenut im Kunststoff-Formteil hingewiesen.

Die Erfindung wird anhand eines in den beiliegenden Zeichnungen gezeigten Ausführungsbeispieles näher erläutert. Es zeigt:
- Fig. 1: einen vertikalen Schnitt durch eine Planetenradträger-Anordnung mit einer ringförmigen Ölstauscheibe gemäß der Erfindung;
- Fig. 2: einen Teilschnitt durch den Bereich Z in Fig. 1 der erfindungsgemäßen Ölstauscheibe mit in die Haltenut eingesetzten O-Ring und noch nicht montierter Ölstauscheibe und
- Fig. 3: einen Teilschnitt durch den Bereich Z in Fig. 1 der erfindungsgemäßen Ölstauscheibe in eingebautem Zustand.

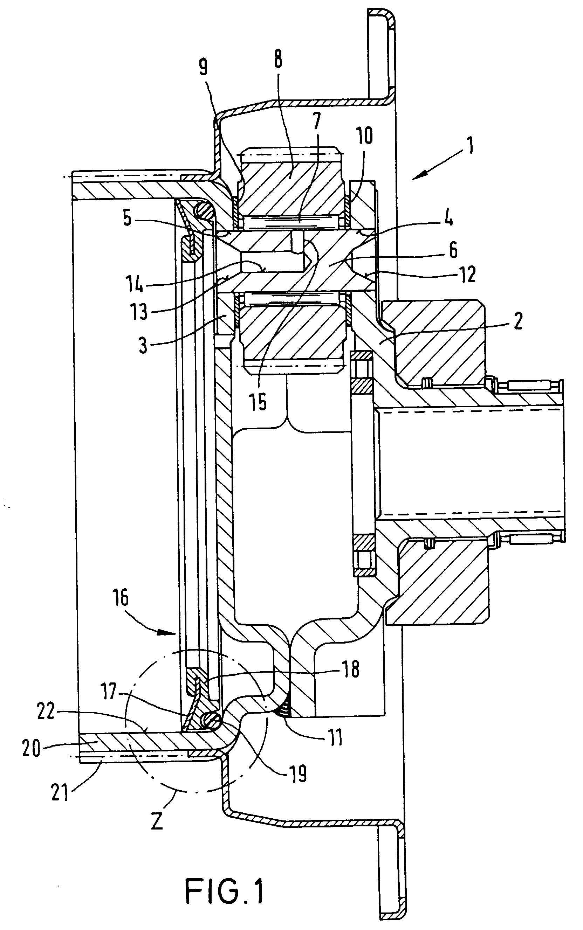

In Fig. 1 ist eine Planetenradträger-Anordnung 1 gezeigt, die im wesentlichen aus einem Planetenradträger-Nabenbauteil 2 und einem gegenüberliegenden Seitenwandbauteil 3 besteht, die in entsprechenden Bohrungen 4 bzw. 5 eine Mehrzahl von Planetenradbolzen 6 aufnehmen, auf denen über Nadellager 7 Planetenräder 8 drehbar gelagert sind.

Zwischen dem Nabenbauteil 2 und dem Seitenwandbauteil 3 und den Planetenrädern 8 sind in bekannter Weise Anlaufscheiben-Anordnungen 9 und 10 vorgesehen.

Die beiden Planetenradträgerbauteile, das Nabenbauteil 2 und das Seitenwandbauteil 3, können z.B. als Fließpreßbauteil bzw. als Blechpreßbauteil ausgebildet sein und werden zum Bilden des Planetenradträgers miteinander bei 11 verschweißt.

Die Planetenradbolzen 6 weisen an ihren Enden konische Ansenkungen 12 und 13 auf, über die sie durch radiales Aufweiten in den Bohrungen 4 und 5 der Planetenradbauteile 2 und 3 festgelegt werden.

Von der einen konischen Ausnehmung 13 erstreckt sich eine axiale Bohrung 14 zu einer radialen Bohrung 15, über die Schmiermittel zur Nadellagerung 7 des Planetenrades 8 geführt wird.

Die Ölstauscheibe 16 besteht aus einem selbstsichernden Konusring 17, einem Kunststoff-Formteil 18 und einem O-Ring 19.

Das Seitenwandbauteil 3 ist einstückig mit einem Trommelbauteil 20 für eine benachbarte Kupplung ausgebildet und das Trommelbauteil 20 nimmt in seinem Inneren die Ölstauscheibe 16 auf. Trommelbauteile 20 für Kupplungen innerhalb eines automatischen Getriebes weisen am Außenumfang eine zahnartige Profilierung 21 auf, die z.B. durch Rollen hergestellt wird und zur Aufnahme von radialen Vorsprüngen entsprechender Lamellenkupplungsscheiben vorgesehen ist.

Dadurch kann der Endbereich des Innenumfanges 22 des Trommelbauteiles 20 nicht einwandfrei kreisrund verlaufend ausgebildet sein, wodurch das Einarbeiten einer Haltenut für z.B. einen Seegerring schwierig wird.

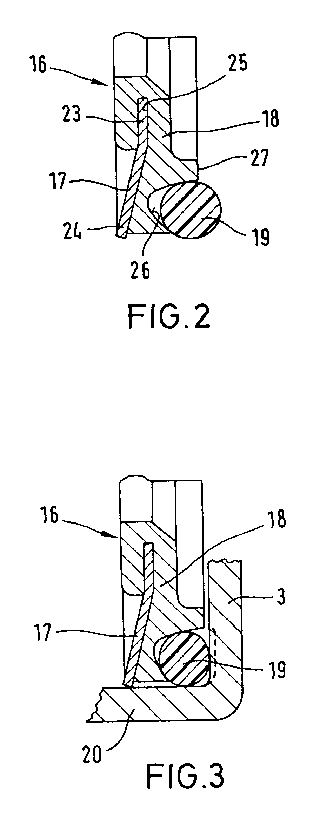

Wie aus den Figuren 2 und 3 zu ersehen ist, besteht der selbstsichernde Konusring 17 aus einem inneren, ebenen Ringteil 23 und einem äußeren kegelförmigen Ringteil 24, der Kunststoff-Formteil 18 weist eine sich radial erstrekkende Aufnahmenut 25 für den Konusring 17 und eine Haltenut 26 für den O-Ring 19 auf. Die Haltenut 26 für den O-Ring 19 ist hierbei nach außen geneigt V-förmig ausgebildet, damit, wie aus Fig. 3 ersichtlich ist, der O-Ring 19 sich durch axiale Anlage am Ende des Seitenwandbauteiles 3, die durch einen Endanschlag 27 bestimmt wird, auch radial nach außen verformen kann, um eine sichere Abdichtung im Endbereich des Innenumfanges 22 des Trommelbauteiles 20 sicherzustellen.

Die einzelnen Bauteile der erfindungsgemäßen Ölstauscheibe sind mittels einfacher, bekannter Herstellungsverfahren zu fertigen und durch eine entsprechende Vormontage werden der Konusring 17, das Kunststoff-Formteil 18 und der O-Ring 19 zu einer Montageeinheit zusammengefaßt, die dann nur noch axial in das Trommelbauteil 20 bis zum Endanschlag 27 eingeschoben werden muß.

Die Ölstauscheibe aus der Kombination eines selbstsichernden Konusringes, dem Kunststoff-Formteil und einem O-Ring ermöglicht eine vollständige Abdichtung des Endbereiches des Innenumfanges des Trommelbauteiles, auch wenn die Kreiskontur des Trommelbauteiles Unregelmäßigkeiten aufweist, die vom Formen der zahnartigen Profilierung herrühren.

## Patentansprüche

1. Planetenradträger-Anordnung mit einer ringförmigen Ölstauscheibe (16), die an einem Bereich radial außerhalb der Planetenradbolzen (6) an einem Seitenwandbauteil (3) des Planetenradträgers (1) festgelegt ist und sich radial so weit nach innen erstreckt, daß ihre Innenkante die in den Planetenradbolzen (6) vorgesehenen axialen Schmierölbohrungen (14) nach innen übergreift, wobei das Seitenwandbauteil (3) als ein Trommelbauteil (20) für eine benachbarte Kupplung ausgebildet ist,
**dadurch gekennzeichnet**, daß die Ölstauscheibe (16) aus
- einem sich am Innenumfang (22) des Trommelbauteiles (20) verspreizenden, selbstsichernden Konusring (17),
- einem auf dessen glatten Innenumfang (25) aufgeklipsten oder aufgeschweißten Kunststoff-Formteil (18) mit einer Haltenut (26) und einem Endanschlag (27) und
- einem in der Haltenut (26) aufgenommenen O-Ring (19) besteht.

2. Planetenradträger-Anordnung nach Anspruch 1,
**dadurch gekennzeichnet**, daß
- die im Kunststoff-Formteil (18) ausgebildete Haltenut (26) eine radial nach außen geneigte V-Form aufweist und den O-Ring (19) gegenüber seiner inneren Abstützung außen axial zurückspringend abstützt.

## Claims

1. A planet gear carrier with an annular oil shield (16) which is secured in a region radially outside the planet wheel spindle (6) to a side wall part (3) of the planet gear carrier (1) and extends so far radially inwards that its inner edge inwardly overlaps the axial lubricating bores (14) present in the planet wheel spindle (6), the side wall part (3) being formed as a drum member (20) of an adjacent clutch,
characterised in that
the oil shield (16) comprises
- a self-locking cone ring (17) spreadably braced against the inner circumference (22) of the drum member (20),
- a moulded part (18) of plastics material clipped or welded to the smooth inner circumference (25) of said cone ring (17) and having a retaining groove (26) and an end stop (27), and
- an O-ring (19) received in said retaining groove (26).

2. A planet gear carrier as claimed in claim 1,
characterised in that
- the retaining groove (26) formed in the moulded plastics material part (18) has a radially outwardly inclined V-shape and supports the O-ring (19) against its inner abutment in an axially outwardly rebounding manner.

## Revendications

1. Dispositif de porte-satellites comprenant un disque annulaire de retenue d'huile (16) qui est fixé dans une zone située radialement à l'extérieur des axes (6) des pignons satellites sur un composant formant une paroi latérale (3) du porte-satellites (1) et s'étendant radialement vers l'intérieur au point que son bord intérieur dépasse, radialement vers l'intérieur, les perçages axiaux (14) prévus à l'intérieur des axes (6) des pignons satellites pour l'amenée d'huile de graissage, le composant-paroi latérale (3) étant réalisé pour constituer un tambour (20) pour un embrayage voisin, caractérisé en ce que le disque de retenue d'huile (16) est composé
- d'un anneau conique (17) se bloquant automatiquement par son écartement sur la périphérie intérieure (22) du tambour (20),
- d'une pièce moulée (18) en matière plastique, encliquetée ou soudée sur la périphérie intérieure (25) lisse de cet anneau et possédant une gorge de maintien (26) et une butée de fin de course (27), et
- d'un joint torique (19) disposé dans la gorge de maintien (26).

2. Dispositif de porte-satellites selon la revendication 1, caractérisé en ce que
- la gorge de maintien (26), ménagée dans la pièce moulée (18) en matière plastique, possède une forme en V inclinée radialement vers l'extérieur et supporte le joint torique (19) de manière que celui-ci puisse également se déformer axialement en retrait vers l'extérieur par rapport à son appui intérieur.
